# FASCICULE DE BREVET EUROPEEN

(11) **EP 1 388 387 B1**
(45) Date de publication et mention de la délivrance du brevet: **08.05.2013**
(21) Numéro de dépôt: 03291894.8
(22) Date de dépôt: 30.07.2003
(51) Int. Cl.: B23K 9/10

(54) **Système et procédé de contrôle d'un atelier de soudage à l'arc électrique**
Verfahren und System zum Steuern einer Lichtbogenschweisswerkstatt
Method and system for controlling a electric arc welding workshop

(30) Priorité: 05.08.2002 FR 0209935
(43) Date de publication de la demande: 11.02.2004
(73) Titulaire: L'AIR LIQUIDE, Société Anonyme pour l'Etude et l'Exploitation des Procédés Georges Claude, 75007 Paris (FR)
(72) Inventeur: Cantacuzene, Serban, 91300 Massy (FR); Blot, Roger, 78110 Le Vesinet (FR); Cazottes, Eric, 95440 Ecouen (FR); Cosson, Stéphane, 44270 La Marne (FR); Lecouffe, Jean-Francois, 75017 Paris (FR); Vaidya, Viwek, Québec H3B5E (CA)
(74) Mandataire: Pittis, Olivier

(56) Documents cités:
- EP-A- 0 865 858
- WO-A-99/58285
- WO-A-02/058878
- US-A- 4 518 844

## Description

La présente invention concerne un procédé et un système de contrôle, notamment à distance, d'un atelier de soudage à l'arc électrique où sont mises en oeuvre plusieurs torches de soudage, conformément au préambule des revendications 1 et 8.

La productivité d'un atelier de soudage est une combinaison de plusieurs facteurs et peut dès lors s'exprimer de plusieurs manières, notamment sous la forme d'un taux de dépôt, c'est à dire de la quantité de matière déposée en une heure par un soudeur, ladite quantité de matière correspondant à la quantité de fil fusible utilisée pour réaliser le joint de soudure.

Les paramètres d'ampérage, de vitesse du fil, de vitesse de soudage ou d'efficacité de l'atelier sont tous reliés à l'efficacité du soudage.

Si l'on considère que la taille de cordons de soudure réalisés est conforme aux spécifications, alors en augmentant la vitesse du fil, donc aussi l'ampérage du procédé, on augmente la vitesse de déplacement de l'arc, ce qui implique alors un plus long cordon de soudure déposé par unité de temps.

De la même façon, toute augmentation du taux d'utilisation de l'atelier ou du temps effectif durant lequel l'arc est allumé aura un impact favorable sur le taux de dépôt de l'atelier.

L'efficacité d'un atelier de soudage peut être améliorée à condition de disposer d'outils de diagnostic et de monitoring adéquats permettant d'identifier les causes des inefficacités, tels que vitesse de fil trop basse, ampérage trop bas, faible taux d'utilisation des machines de soudage, faible temps effectif d'arc allumé...

Actuellement, faute d'un système de mesure ou de suivi adéquat, la plupart des professionnels du soudage manuel utilisent le temps total de fabrication ou le nombre de pièces réalisées, dans une période de temps donnée, comme paramètres pour la réalisation des devis, pour la définition de l'ordonnancement global de l'atelier de soudage et surtout pour tenter d'améliorer la productivité de leurs procédés de soudage.

Malheureusement, en utilisant uniquement de tels paramètres, on ne prend pas en compte l'utilisation réelle du procédé de soudage dont l'efficacité dépend non seulement du facteur de marche du procédé, à savoir du rapport du temps pendant lequel l'arc électrique de soudage est allumé au temps de travail total mais aussi de l'optimisation des paramètres de soudage, lorsque l'arc est en fonctionnement, tels que tension, vitesse de fil, intensité, type de mélange gazeux utilisé et débit du gaz de protection mis en oeuvre, angle de la torche par rapport à la pièce à souder, sens de déplacement, propreté des pièces...

Afin de permettre d'améliorer la productivité de l'atelier, de réaliser des devis précis et de gérer l'ordonnancement de l'atelier, il est donc nécessaire de disposer de valeurs mesurables et précises, qui sont directement reliées à l'activité réelle de soudage.

Bien qu'il existe actuellement sur le marché des logiciels de gestion d'atelier de production, il s'avère que ceux-ci ne permettent d'obtenir automatiquement des données mesurables et fiables reflétant directement l'activité de soudage.

Il existe aussi des systèmes de mesure dits 'multi-paramètres' qui extraient des données mesurables reliées au procédé (courant, tension, vitesse de fil...) et qui les utilisent qu'à des fins de traçabilité et d'assurance qualité, mais pas de gestion et d'amélioration à proprement parler d'un atelier de soudage où plusieurs torches sont mises en oeuvre de manière simultanée par des opérateurs différents.

De plus, ces systèmes multi-paramètres mettent obligatoirement en oeuvre plusieurs capteurs pour mesurer les données voulues, en particulier le courant, la tension, la vitesse du fil et le débit de gaz. Or, il s'avère que le coût de l'ensemble de ces capteurs et du système les utilisant est habituellement élevé et donc souvent dissuasif.

En définitive, tous les systèmes qui existent actuellement sont trop complexes et/ou ont un coût plusieurs fois supérieur à celui acceptable au plan industriel, et/ou ne conduisent qu'à des résultats médiocres ou imparfaits.

Par ailleurs, le document WO-A-02/058878 enseigne un système et un procédé de contrôle à distance d'équipements de soudage situés loin les uns des autres, par exemple dans des régions différentes, utilisant des réseaux de télécommunication, tels le Web, de manière à permettre de régler à distance ces équipements, et à gérer leur maintenance et le réapprovisionnement en gaz et en consommables.
En outre, le document US-A-4 518 844 propose un procédé de contrôle d'un procédé de soudage MIG avec monitorage du rapport des intégrales des durées d'arc et de court-circuit.

A ce jour, il n'existe donc pas de système simple et économique permettant de gérer efficacement un atelier de soudage où plusieurs torches sont mises en oeuvre de manière simultanée par des opérateurs différents, c'est-à-dire de faire le lien entre un paramètre mesuré et les éléments de gestion de l'atelier, à savoir le facteur de marche et le taux de dépôt

Le problème que se propose de résoudre la présente invention est alors d'optimiser et/ou d'améliorer la productivité d'un atelier de soudage d'une façon simple, flexible et économique, qui puisse en outre être réalisée à distance, c'est-à-dire par télémaintenance et/ou télé-gestion, en particulier lorsque plusieurs torches sont mises en oeuvre de manière simultanée au sein de cet atelier.

En d'autres termes, le but de la présente invention est de proposer un système simple, économique, utilisant le moins de capteurs possible et permettant de mesurer la productivité du soudage et, de préférence simultanément, d'optimiser les paramètres de l'arc, tels que le facteur de marche ou le taux de dépôt

La solution de l'invention un procédé de contrôle d'un atelier de soudage à l'arc électrique dans lequel sont mises en oeuvre plusieurs torches de soudage alimentées chacune par au moins un fil fusible, chaque fil fusible étant animé d'une vitesse de fil et étant soumis à un courant électrique d'intensité, dans lequel :
(a) on détermine, pour chaque torche, au moyen d'un capteur de vitesse au moins une valeur de vitesse du fil représentative de la vitesse moyenne à laquelle chaque fil alimente chaque torche pendant une durée déterminé ou on détermine au moyen d'un capteur de courant au moins une valeur d'intensité du courant représentative du courant moyen auquel est soumis chaque fil pendant la durée déterminée, et
(b) on détermine, à partir d'au moins chaque valeur de vitesse de fil ou chaque valeur d'intensité du courant électrique obtenue à l'étape (a), le facteur de marche FM et le taux de dépôt TD pour chaque torche de l'atelier et/ou éventuellement la valeur moyenne dudit facteur de marche (FM) et dudit taux de dépôt (TD) pour toutes les torches de l'atelier.

Selon le cas, le procédé de l'invention peut comprendre l'une ou plusieurs des caractéristiques techniques suivantes :
- l'atelier comporte de 2 à 20 torches de soudage alimentées chacune avec un ou plusieurs fil de soudage, de préférence avec 1 ou 2 fils.
- il comporte une étape de mémorisation dudit facteur de marche (FM) et dudit taux de dépôt (TD) et/ou de la vitesse du fil ou de l'intensité du courant
- il comporte une étape de transmission dudit facteur de marche (FM) et dudit taux de dépôt (TD) et/ou de la vitesse du fil ou de ladite intensité à des moyens de surveillance de l'atelier, de préférence une étape de télétransmission.
- il comporte une étape d'acquisition et de stockage d'au moins une valeur de vitesse de fil déterminé par le capteur de vitesse ou d'au moins une valeur d'intensité du courant déterminée par le capteur de courant.
- il comporte une étape de traitement des valeurs de vitesse de fil ou des valeurs d'intensité avant et/ou après stockage, de préférence avant stockage.
- l'étape de traitement de chaque valeur de vitesse de fil ou de chaque valeur d'intensité consiste à calculer le facteur de marche et le taux de dépôt pour chaque torche de l'atelier et/ou éventuellement la valeur moyenne de ces paramètres pour toutes les torches de l'atelier.

L'invention un système de contrôle d'un atelier de soudage à l'arc électrique dans lequel sont mises en oeuvre plusieurs torches de soudage alimentées chacune par au moins un fil fusible, chaque fil fusible étant animé d'une vitesse de fil et étant soumis à un courant électrique d'intensité, comportant :
(a) des premier moyens de détermination, pour chaque torche, comprenant un capteur de vitesse permettant de déterminer au moins une valeur de vitesse du fil représentative de la vitesse moyenne à laquelle chaque fil alimente chaque torche pendant une durée déterminé ou comprenant au moins un capteur de courant permettant de déterminer au moins une valeur d'intensité du courant représentative du courant moyen auquel est soumis chaque fil pendant la durée déterminée, et
(b) des second moyens de détermination coopérant avec les premier moyens de détermination pour déterminer, à partir d'au moins chaque valeur de vitesse de fil ou chaque valeur d'intensité du courant électrique déterminer par les premier moyens de détermination, le facteur de marche et le taux de dépôt pour chaque torche de l'atelier et/ou éventuellement la valeur moyenne de ces paramètres pour toutes les torches de l'atelier.

Selon le cas, le système de l'invention peut comprendre l'une ou plusieurs des caractéristiques techniques suivantes :
- il comporte des moyens de mémorisation pour mémoriser le facteur de marche et le taux de dépôt et/ou au moins une valeur de vitesse du fil et/ou d'intensité du courant pour au moins une torche de l'atelier.
- il comporte des moyens de transmission permettant de transmettre ledit facteur de marche (FM) et ledit taux de dépôt (TD) et/ou de la vitesse du fil ou de ladite intensité à des moyens de surveillance de l'atelier.
- il comporte des moyens d'acquisition et de stockage pour acquérir et stocker au moins une valeur de vitesse de fil déterminé par le capteur de vitesse ou au moins une valeur d'intensité du courant déterminée par le capteur de courant, et/ou des moyens de traitement pour traiter les valeurs de vitesse de fil et/ou les valeurs d'intensité avant et/ou après stockage.

Lors d'une opération de soudage, il y a coexistence de trois vecteurs, à savoir l'arc qui est le vecteur d'énergie de soudage, le fil fusible de soudage qui est le vecteur de matière (métal d'apport) et le gaz qui est le vecteur d'atmosphère (protection gazeuse).

De ce fait, le temps d'arc allumé ou facteur de marche peut être mesuré de trois façons différentes, à savoir :
- soit par la mesure électrique du temps durant lequel le courant ou la tension sont non nulles, ce qui correspond au temps d'existence de l'arc,
- soit par la mesure du temps durant lequel le débit du gaz est non nul, ce qui correspond au temps de présence du gaz,
- soit par la mesure du temps durant lequel la vitesse de déroulement du fil est non nulle, ce qui correspond au temps de l'apport de matière.

Selon un premier aspect de l'invention le choix spécifique de la mesure de la vitesse du fil de déroulement, encore appelée "vitesse de dévidage du fil" ou plus simplement "vitesse du fil", permet à la fois :
- de mesurer le temps pendant lequel il y a déroulement du fil et fusion de celui-ci par l'arc, ce qui correspond donc aussi au temps pendant lequel l'arc est allumé car sinon le fil ne serait pas fondu et ne se déroulerait pas, et donc la vitesse de dévidage du fil serait toujours nulle, et
- de mesurer simultanément la quantité de matière apportée et fondue, qui représente, à quelques % en poids près, la quantité de métal déposée par le soudeur, encore appelé "taux de dépôt" ; le taux de dépôt est le paramètre de productivité de l'arc allumé.

Utiliser la mesure de la vitesse du fil conduit donc à une mesure de l'optimisation de l'arc lorsqu'il est allumé.

Selon un aspect de l'invention, on utilise un capteur unique de courant pour déterminer l'intensité du courant électrique.

En effet, il est bien connu que, pour chaque type de fil, il existe une plage de fonctionnement qui relie la valeur d'intensité (communément appelée « valeur du courant ») et la valeur de vitesse du fil.

De ce fait, mesurer la vitesse du fil ou la valeur du courant conduit à un résultat très proche dès lors que la relation en question est mémorisée ; la mémorisation pouvant se faire au sein d'un programme (logiciel) adéquat.

Pour plus de détails, on peut se reporter au document : Les procédés de soudage à l'arc, Les Soudages TIG, MIG et MAG, L'AIR LIQUIDE, publié en mai 1995, qui expliquent les relations entre vitesse de fil et intensité du courant, en fonction de la nature du fil de soudage considéré et du gaz utilisé ; voir notamment pages 26, 35 et 44.

L'idée à la base de la présente invention est donc de mesurer, avec un seul capteur simple de vitesse de fil ou de courant, la productivité du soudage à l'arc, tel que MIG/MAG, au travers du facteur de marche et du taux de dépôt.

La mesure de la vitesse du fil ou du courant peut être réalisée très facilement au moyen d'un capteur unique, disponible sur le marché, situé respectivement au niveau de la sortie du fil du dévidoir pour le capteur de vitesse de fil où sur le secondaire du générateur pour le capteur de courant.

De là, en connaissant la quantité de métal à déposer pour une longueur donnée de joint à réaliser, il est aisé de relier cette valeur aux mesures faites sur le taux de dépôt pour prévoir un temps de fabrication global de la pièce à souder.

En prenant en compte ces deux valeurs, à savoir la quantité de métal à déposer et le taux de dépôt, on peut alors prévoir les postes de soudage qui peuvent réaliser la fabrication et leur taux de charges, c'est-à-dire faire de l'ordonnancement au sein de l'atelier de soudage, ainsi que réaliser des devis réalistes à partir des temps de fabrication définis.

La présente invention permet donc, avec un seul capteur simple de vitesse de fil ou de courant, en plus d'une mesure de productivité en soudage, de réaliser un outil pour réaliser des devis de fabrication et de réaliser un outil d'ordonnancement d'atelier de soudage.

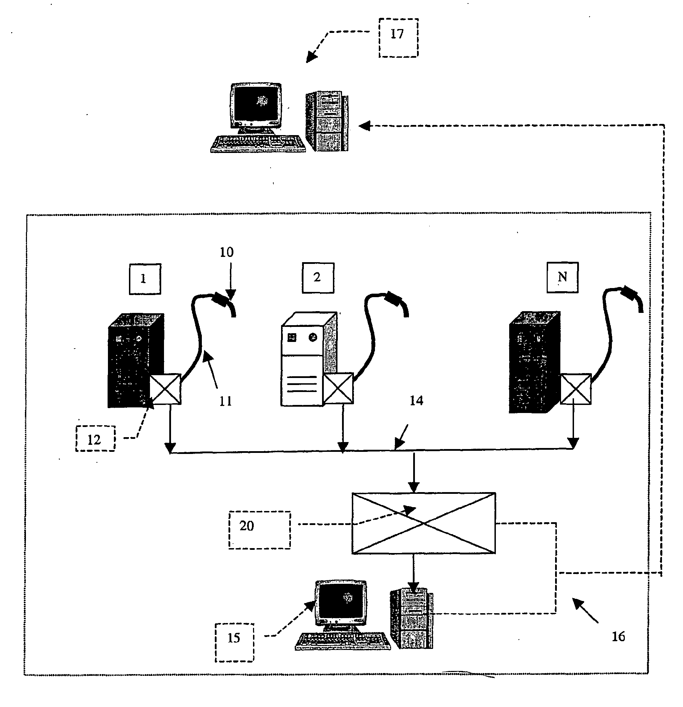

L'invention va être mieux comprise grâce à la description qui suit d'un exemple de réalisation de l'invention illustré sur la figure 1 ci-année, dans lequel un capteur de vitesse de fil est utilisé.

Sur la figure 1, on a représenté un atelier de soudage manuel utilisant N postes de soudage numérotés de 1 à N. Une valeur typique de N est par exemple comprise entre 6 et 12, mais pourrait dans certains cas dépasser la centaine, voire être à l'inverse inférieure à 6.

Chaque poste de soudage 1, 2,... N, encore appelé générateur, comprend une torche 10 de soudage alimentée en fil 11 de soudage par un dévidoir de fil ou tout autre moyen d'alimentation en fil, incorporé ici à l'intérieur de chaque générateur.

Le courant de soudage est généré puis distribué à chaque torche 10 par les générateurs 1, 2... à N de soudage qui sont ici des postes classiques, tels les générateurs MIG/MAG commercialisés par la SOUDURE AUTOGENE FRANCAISE.

Les torches 10 sont, par ailleurs, alimentées en gaz de soudage par des canalisations de gaz véhiculant des gaz purs ou des mélanges de plusieurs composés gazeux, par exemple les gaz ou mélanges gazeux de la gamme ARCAL^{TM} commercialisés par L'AIR LIQUIDE.

Une des extrémités du (ou de chaque) fil fusible 11 est progressivement fondue à l'arc électrique de manière à déposer du métal fondu tout au long du joint de soudure en cours de réalisation, lequel métal fondu se solidifie, après dépôt, en un joint soudé réalisé au niveau de la jonction entre les pièces à assembler.

Un capteur 12 de vitesse de fil est agencé sur le parcours de chaque fil de soudage 11, à l'intérieur ou à l'extérieur de chaque générateur 1 à N. De préférence, un même capteur 12 est monté sur tous les postes 1 à N, indépendamment du type de générateur, ce qui permet de suivre la vitesse du fil 11 pour la totalité des postes 1 à N de l'atelier.

Selon un mode de réalisation de l'invention, une capacité de traitement et de stockage de données (non schématisé), comprenant par exemple un processeur, une ou plusieurs mémoires RAM, un logiciel installé sur une EPROM, une carte convertisseur analogique numérique et un protocole de communication est prévue au niveau du capteur 12, ce qui permet de limiter le flux d'informations vers les moyens d'acquisition 20 aux seules valeurs numériques utiles ou, suivant le cas, aux valeurs moyennes sur une période de temps donnée. Bien entendu, la fréquence d'échantillonnage des données et la durée sur laquelle la moyenne est réalisée sont paramétrables.

Les capteurs 12 de vitesse sont reliés 14, directement ou indirectement, à des cartes d'acquisition ou à des ports de communication 20, par exemple par l'intermédiaire de fils électriques, analogiques ou numériques.

Les moyens d'acquisition 20 permettent d'acquérir, de stocker et/ou de traiter toute ou partie des informations qui leur sont transmis par les capteurs 12 ou les capacités de traitement et de stockage associées auxdits capteurs 12.

Les données acquises par les moyens d'acquisition 20 sont ensuite transmises puis stockées sur une unité 15 de traitement de données, tel qu'une unité centrale d'ordinateur de type PC, situés par exemple dans ou à proximité de l'atelier.

Cette unité 15 de traitement de données calcule, en temps réel, le facteur de marche FM, qui est défini comme le pourcentage du temps durant lequel l'arc est allumé, et le taux de dépôt TD, qui est défini comme la quantité de matière déposée par unité de temps, pour chacun des différent postes 1 à N.

Les valeurs ainsi obtenues permettent de suivre, au cours du temps, la charge de travail de chaque poste 1 à N, et l'écart-type des valeurs mesurées permettant de connaître la régularité de chaque poste 1 à N.

Pour chaque type de travail réalisé sur chaque poste 1 à N, il est alors relativement aisé de définir des profils-types de fabrication pour les grandes classes de pièces, à partir de la connaissance du facteur de marche et du taux de dépôt pour chacune des grandes classes de pièces en fonction du générateur utilisé. Ces profils-types, organisés sous la forme d'une bibliothèque de modèles et constamment remis à jour, pourront, en outre, être utilisés lors de la réalisation des devis futurs.

Lors de la réception de toute nouvelle commande, le responsable de l'ordonnancement de l'atelier choisit un modèle de fabrication-type et l'attribue à un poste de travail, suivant la charge de travail prévue. De cette manière la gestion prévisionnelle du taux de charge de chaque machine de l'atelier peut être réalisée.

Par ailleurs, de manière à permettre un suivi ou une gestion à distance des différents postes 1 à N, les données acquises par les moyens d'acquisition 20 et/ou stockées sur l'unité 15 de traitement de données peuvent être télé-transmises, par exemple par un réseau de communication 16, tel le réseau Internet, à une centrale 17 de gestion à distance où ces données pourront être sauvegardées, analysées, traitées... pour en extraire par exemple des tendances de sorte de pouvoir par exemple activer des alarmes ou rétro-agir sur les postes de soudage par exemple.

La présente invention a été mise en oeuvre dans un atelier de fabrication de boîtiers métalliques au sein duquel jusqu'à 12 torches de soudage peuvent être utilisées simultanément pour souder les boîtiers métalliques. Les 12 torches de soudage de l'atelier fabriquent le même type de cordon de soudage sur le même type de pièces.

Les torches utilisées dans cet atelier travaillent suivant un procédé GMAW, le fil est LAS-6 et le gaz de protection est un mélange formé de 75% Ar et 25% CO₂.

Les valeurs moyennes de vitesse de fil, de courant et de vitesse de soudage ont été mesurés sur les 12 torches de l'atelier avant et, à titre comparatif, après mise en oeuvre de l'invention ; les résultats obtenus sont consignés dans les tableaux I et II ci-dessous, respectivement.

La productivité de l'atelier a été calculée sous la forme d'une vitesse de soudage, qui, pour un même joint, est proportionnelle au taux de dépôt (TD).

**Tableau I : Avant mise en oeuvre de l'invention**

| Poste de Travail n° | Vitesse de fil (cm/min) | Moyenne de courant (A) | Vitesse de soudage (cm/min) |
|---|---|---|---|
| 1 | 584 | 95 | 41 |
| 2 | 709 | 152 | 49 |
| 3 | 800 | 135 | 59 |
| 4 | 635 | 95 | 59 |
| 5 | 599 | 173 | 41 |
| 6 | 853 | 143 | 52 |
| 7 | 663 | 134 | 55 |
| 8 | 660 | 135 | 49 |
| 9 | 536 | 127 | 51 |
| 10 | 813 | 154 | 47 |
| 11 | 584 | 150 | 47 |
| 12 | 483 | 125 | 31 |
| Moyenne de l'atelier | 660 | 135 | 48 |

**Tableau II : Après mise en oeuvre du procédé de l'invention**

| Poste de travail | Vitesse de fil (cm/min) | Moyenne courant (A) | Vitesse de soudage (cm/min) |
|---|---|---|---|
| 1 | 940 | 182 | 66 |
| 2 | 958 | 155 | 51 |
| 3 | 889 | 165 | 59 |
| 4 | 1118 | 200 | 72 |
| 5 | 889 | 165 | 60 |
| 6 | 871 | 162 | 73 |
| 7 | 953 | 175 | 55 |
| 8 | 838 | 157 | 73 |
| 9 | 907 | 160 | 74 |
| 10 | 826 | 165 | 74 |
| 11 | 927 | 180 | 94 |
| 12 | 986 | 170 | 68 |
| Moyenne atelier | 925 | 170 | 68 |

Il apparaît clairement au vu des tableaux I et II que le procédé de l'invention a permis de réduire la dispersion des réglages utilisés par les soudeurs, d'augmenter la vitesse du fil de 40% et d'augmenter l'efficacité du soudage de plus de 41% (exprimée comme la longueur de cordon déposé par unité de temps).

La présente invention conduit donc à une amélioration notable de la productivité de l'atelier grâce à une meilleure gestion des torches.

## Revendications

1. Procédé de contrôle d'un atelier de soudage à l'arc électrique dans lequel sont mises en oeuvre plusieurs torches (10) de soudage alimentées chacune par au moins un fil fusible (11), chaque fil fusible (11) étant animé d'une vitesse de fil (V) et étant soumis à un courant électrique d'intensité (I), dans lequel :
on détermine, pour chaque torche (10), au moyen d'un capteur de vitesse au moins une valeur de vitesse du fil (V) représentative de la vitesse moyenne à laquelle chaque fil (11) alimente chaque torche (10) pendant une durée (T) déterminée ou on détermine au moyen d'un capteur de courant au moins une valeur d'intensité (I) du courant représentative du courant moyen auquel est soumis chaque fil (11) pendant la durée (T) déterminée, **caractérisé en ce que**
on détermine, à partir d'au moins chaque valeur de vitesse (V) de fil (11) ou chaque valeur d'intensité (I) du courant électrique obtenue à l'étape antérieure, le facteur de marche (FM) et le taux de dépôt (TD) pour chaque torche (10) de l'atelier et/ou éventuellement la valeur moyenne dudit facteur de marche (FM) et dudit taux de dépôt (TD) pour toutes les torches de l'atelier.

2. Procédé selon la revendication 1, **caractérisé en ce que** l'atelier comporte de 2 à 20 torches de soudage alimentées chacune avec un ou plusieurs fil de soudage, de préférence avec 1 ou 2 fils.

3. Procédé selon l'une des revendications 1 ou 2, **caractérisé en ce qu'**il comporte une étape de mémorisation dudit facteur de marche (FM) et dudit taux de dépôt (TD) et/ou de la vitesse du fil (V) ou de l'intensité (I) du courant.

4. Procédé selon l'une des revendications 1 à 3, **caractérisé en ce qu'**il comporte une étape de transmission dudit facteur de marche (FM) et dudit taux de dépôt (TD) et/ou de la vitesse du fil (V) ou de ladite intensité (I) à des moyens de surveillance de l'atelier, de préférence une étape de télétransmission.

5. Procédé selon l'une des revendications 1 à 4, **caractérisé en ce qu'**il comporte une étape d'acquisition et de stockage d'au moins une valeur de vitesse de fil (V) déterminé par le capteur de vitesse ou d'au moins une valeur d'intensité du courant (I) déterminée par le capteur de courant.

6. Procédé selon l'une des revendications 1 à 5, **caractérisé en ce qu'**il comporte une étape de traitement des valeurs de vitesse de fil (V) ou des valeurs d'intensité (I) avant et/ou après stockage, de préférence avant stockage.

7. Procédé selon la revendication 6, **caractérisé en ce que** l'étape de traitement de chaque valeur de vitesse de fil (V) ou de chaque valeur d'intensité (I) consiste à calculer le facteur de marche (FM) et le taux de dépôt (TD) pour chaque torche (10) de l'atelier et/ou éventuellement la valeur moyenne de ces paramètres pour toutes les torches de l'atelier.

8. Système de contrôle d'un atelier de soudage à l'arc électrique dans lequel sont mises en oeuvre plusieurs torches (10) de soudage alimentées chacune par au moins un fil fusible (11), chaque fil fusible (11) étant animé d'une vitesse de fil (V) et étant soumis à un courant électrique d'intensité (I), comportant
des premier moyens de détermination, pour chaque torche (10), comprenant un capteur de vitesse permettant de déterminer au moins une valeur de vitesse du fil (V) représentative de la vitesse moyenne à laquelle chaque fil (11) alimente chaque torche (10) pendant une durée (T) déterminée ou comprenant au moins un capteur de courant permettant de déterminer au moins une valeur d'intensité (I) du courant représentative du courant moyen auquel est soumis chaque fil (11) pendant la durée (T) déterminée **caractérisé en ce que** le système comporte en outre
des second moyens de détermination coopérant avec les premier moyens de détermination pour déterminer, à partir d'au moins chaque valeur de vitesse (V) de fil (11) ou chaque valeur d'intensité (I) du courant électrique déterminé par les premier moyens de détermination, le facteur de marche (FM) et le taux de dépôt (TD) pour chaque torche (10) de l'atelier et/ou éventuellement la valeur moyenne dudit facteur de marche (FM) et dudit taux de dépôt (TD) pour toutes les torches de l'atelier.

9. Système selon la revendication 8, **caractérisé en ce qu'**il comporte des moyens de mémorisation pour mémoriser le facteur de marche (FM) et le taux de dépôt (TD) et/ou au moins une valeur de vitesse du fil (V) et/ou d'intensité (I) du courant pour au moins une torche de l'atelier.

10. Système selon l'une des revendications 8 ou 9, **caractérisé en ce qu'**il comporte des moyens de transmission permettant de transmettre ledit facteur de marche (FM) et ledit taux de dépôt et/ou de la vitesse du fil (V) ou de ladite intensité (I) à des moyens de surveillance de l'atelier.

11. Système selon l'une des revendications 8 à 10, **caractérisé en ce qu'**il comporte :
- des moyens d'acquisition et de stockage pour acquérir et stocker au moins une valeur de vitesse de fil (V) déterminée par le capteur de vitesse ou au moins de vitesse de (V) de vitesse moins une valeur d'intensité du courant (I) déterminée par le capteur de courant, et/ou
- des moyens de traitement pour traiter les valeurs de vitesse de fil (V) et/ou les valeurs d'intensité (I) avant et/ou après stockage.

## Patentansprüche

1. Verfahren zum Kontrollieren einer Lichtbogenschweiß-Werkstatt, in der mehrere Schweißbrenner (10) verwendet werden, die jeweils durch mindestens einen Schmelzdraht (11) gespeist werden, wobei jeder Schmelzdraht (11) mit einer Drahtgeschwindigkeit (V) angetrieben wird und einem elektrischen Strom mit einer Stärke (I) ausgesetzt ist, wobei:
für jeden Brenner (10), mit Hilfe eines Geschwindigkeitsgebers mindestens ein Wert der Geschwindigkeit des Drahtes (V) bestimmt wird, der repräsentativ für die gemittelte Geschwindigkeit ist, mit der jeder Draht (11) jeden Brenner (10) über eine bestimmte Dauer (T) speist, oder mit Hilfe eines Stromsensors mindestens ein Wert der Stärke (I) des Stroms bestimmt wird, der repräsentativ für den gemittelten Strom ist, dem jeder Draht (11) über eine bestimmte Dauer (T) ausgesetzt ist, **dadurch gekennzeichnet, dass**
ausgehend von mindestens jedem Wert der Geschwindigkeit (V) des Drahtes (11) oder von jedem Wert der Stärke (I) des elektrischen Stroms, der im vorherigen Schritt erhalten wurde, der Leistungsfaktor (FM) und der Abschmelzgrad (TD) für jeden Brenner (10) der Werkstatt und/oder gegebenenfalls der gemittelte Wert des Leistungsfaktors (FM) und des Abschmelzgrads (TD) für alle Brenner der Werkstatt bestimmt wird.

2. Verfahren nach Anspruch 1, **dadurch gekennzeichnet, dass** die Werkstatt 2 bis 20 Schweißbrenner aufweist, die jeweils mit einem oder mehreren Schmelzdrähten, vorzugsweise mit 1 oder 2 Drähten, gespeist werden.

3. Verfahren nach einem der Ansprüche 1 oder 2, **dadurch gekennzeichnet, dass** es einen Schritt der Speicherung des Leistungsfaktors (FM) und des Abschmelzgrads (TD) und/oder der Drahtgeschwindigkeit (V) oder der Stromstärke (I) aufweist.

4. Verfahren nach einem der Ansprüche 1 bis 3, **dadurch gekennzeichnet, dass** es einen Schritt der Übertragung des Leistungsfaktors (FM) und des Abschmelzgrads (TD) und/oder der Drahtgeschwindigkeit (V) oder der Stromstärke (I) an Mittel zum Überwachen der Werkstatt, vorzugsweise einen Schritt der Fernübertragung, aufweist.

5. Verfahren nach einem der Ansprüche 1 bis 4, **dadurch gekennzeichnet, dass** es einen Schritt der Erfassung und der Abspeicherung von mindestens einem Wert der Drahtgeschwindigkeit (V), der durch den Geschwindigkeitsgeber bestimmt wurde, oder von mindestens einem Wert der Stromstärke (I), der durch den Stromsensor bestimmt wurde, aufweist.

6. Verfahren nach einem der Ansprüche 1 bis 5, **dadurch gekennzeichnet, dass** es einen Schritt der Verarbeitung der Werte der Drahtgeschwindigkeit (V) oder der Werte der Stromstärke (I) vor und/oder nach der Abspeicherung, vorzugsweise vor der Abspeicherung, aufweist.

7. Verfahren nach Anspruch 6, **dadurch gekennzeichnet, dass** der Schritt der Verarbeitung jedes Wertes der Drahtgeschwindigkeit (V) oder jedes Wertes der Stromstärke (I) darin besteht, den Leistungsfaktor (FM) und den Abschmelzgrad (TD) für jeden Brenner (10) der Werkstatt und/oder gegebenenfalls den gemittelten Wert dieser Parameter für alle Brenner der Werkstatt zu berechnen.

8. System zum Kontrollieren einer Lichtbogenschweiß-Werkstatt, in der mehrere Schweißbrenner (10) verwendet werden, die jeweils durch mindestens einen Schmelzdraht (11) gespeist werden, wobei jeder Schmelzdraht (11) mit einer Drahtgeschwindigkeit (V) angetrieben wird und einem elektrischen Strom mit einer Stärke (I) ausgesetzt ist, aufweisend
erste Bestimmungsmittel, für jeden Brenner (10), die einen Geschwindigkeitsgeber umfassen zum Bestimmen mindestens eines Wertes der Geschwindigkeit des Drahtes (V), der repräsentativ für die gemittelte Geschwindigkeit ist, mit der jeder Draht (11) jeden Brenner (10) über eine bestimmte Dauer (T) speist, oder mindestens einen Stromsensor umfassen zum Bestimmen mindestens eines Wertes der Stärke (I) des Stroms, der repräsentativ für den gemittelten Strom ist, dem jeder Draht (11) über die bestimmte Dauer (T) ausgesetzt ist, **dadurch gekennzeichnet, dass** das System ferner
zweite Bestimmungsmittel umfasst, die mit den ersten Bestimmungsmitteln zusammenzuwirken, um, ausgehend von mindestens jedem Wert der Geschwindigkeit (V) des Drahtes (11) oder von jedem Wert der Stärke (I) des elektrischen Stroms, der durch die ersten Bestimmungsmittel bestimmt wurde, den Leistungsfaktor (FM) und den Abschmelzgrad (TD) für jeden Brenner (10) der Werkstatt und/oder gegebenenfalls den gemittelten Wert des Leistungsfaktors (FM) und des Abschmelzgrads (TD) für alle Brenner der Werkstatt zu bestimmen.

9. System nach Anspruch 8, **dadurch gekennzeichnet, dass** es Speichermittel aufweist, um den Leistungsfaktor (FM) und den Abschmelzgrad (TD) und/oder mindestens einen Wert der Drahtgeschwindigkeit (V) und/oder der Stromstärke (I) für mindestens einen Brenner der Werkstatt zu speichern.

10. System nach einem der Ansprüche 8 oder 9, **dadurch gekennzeichnet, dass** es Übertragungsmittel zum Übertragen des Leistungsfaktors (FM) und des Abschmelzgrads (TD) und/oder der Drahtgeschwindigkeit (V) oder der Stromstärke (I) an Mittel zum Überwachen der Werkstatt aufweist.

11. System nach einem der Ansprüche 8 bis 10, **dadurch gekennzeichnet, dass** es Folgendes aufweist:
- Erfassungs- und Abspeichermittel, um mindestens einen Wert der Drahtgeschwindigkeit (V), der durch den Geschwindigkeitsgeber bestimmt wurde, oder mindestens einen Wert der Stromstärke (I), der durch den Stromsensor bestimmt wurde, zu erfassen und abzuspeichern, und/oder
- Verarbeitungsmittel, um die Werte der Drahtgeschwindigkeit (V) und/oder der Stromstärke (I) vor und/oder nach dem Abspeichern zu verarbeiten.

## Claims

1. Method for controlling an electric arc welding workshop in which a plurality of welding torches (10) are used which are each fed by at least one consumable wire (11), each consumable wire (11) being moved at a wire speed (V) and being subjected to an electrical current of intensity (I), in which method:
at least one wire speed value (V) is determined by a speed sensor for each torch (10), which wire speed value is representative of the average speed at which each wire (11) feeds each torch (10) over a given period (T) or at least one current intensity value (I) is determined by a current sensor, which current intensity value is representative of the average current to which each wire (11) is subjected over a given period (T), **characterised in that** the duty cycle (FM) and the deposition rate (TD) for each torch (10) in the workshop and/or optionally the average value of said duty cycle (FM) and said deposition rate (TD) for all the torches in the workshop are determined from at least each speed value (V) of the wire (11) or each electric current intensity value (I) obtained in the previous step.

2. Method according to claim 1, **characterised in that** the workshop comprises from 2 to 20 welding torches, each fed by one or more of consumable wires, preferably by one or two wires.

3. Method according to either claim 1 or claim 2, **characterised in that** it comprises a step of recording said duty cycle (FM) and said deposition rate (TD) and/or the wire speed (V) or the current intensity (I).

4. Method according to any of claims 1 to 3, **characterised in that** it comprises a step of transmitting said duty cycle (FM) and said deposition rate (TD) and/or the wire speed (V) or said intensity (I) to the workshop monitoring means, this preferably being a remote transmission step.

5. Method according to any of claims 1 to 4, **characterised in that** it comprises a step of acquiring and storing at least one wire speed value (V) determined by the speed sensor or at least one current intensity value (I) determined by the current sensor.

6. Method according to any of claims 1 to 5, **characterised in that** it comprises a step of processing the wire speed values (V) or the intensity values (I) before and/or after storage, preferably before storage.

7. Method according to claim 6, **characterised in that** the step of processing each wire speed value (V) or each intensity value (I) consists in calculating the duty cycle (FM) and the deposition rate (TD) for each torch (10) in the workshop and/or optionally the average value of these parameters for all the torches in the workshop.

8. System for controlling an electric arc welding workshop in which a plurality of welding torches (10) are used which are each fed by at least one consumable wire (11), each consumable wire (11) being moved at a wire speed (V) and being subjected to an electrical current of intensity (I), comprising first determination means for each torch (10), comprising a speed sensor which makes it possible to determine at least one wire speed value (V) which is representative of the average speed at which each wire (11) feeds each torch (10) over a given period (T), or comprising at least one current sensor which makes it possible to determine at least one current intensity value (I) which is representative of the average current to which each wire (11) is subjected over the given period (T), **characterised in that** the system further comprises second determination means that cooperate with the first determination means in order to determine, from at least each speed value (V) of the wire (11) or each intensity value (I) of the electrical current determined by the first determination means, the duty cycle (FM) and the deposition rate (TD) for each torch (10) in the workshop and/or optionally the average value of said duty cycle (FM) and said deposition rate (TD) for all the torches in the workshop.

9. System according to claim 8, **characterised in that** it comprises recording means for recording the duty cycle (FM) and the deposition rate (TD) and/or at least one wire speed value (V) and/or current intensity value (I) for at least one torch in the workshop.

10. System according to either claim 8 or claim 9, **characterised in that** it comprises transmission means which make it possible to transmit said duty cycle (FM) and said deposition rate (TD) and/or the wire speed (V) or said intensity (I) to the workshop monitoring means.

11. System according to any of claims 8 to 10, **characterised in that** it comprises:
- acquisition and storage means for acquiring and storing at least one wire speed value (V) determined by the speed sensor or at least one current intensity value (I) determined by the current sensor, and/or
- processing means for processing the wire speed values (V) and/or the intensity values (I) before and/or after storage.
